# FASCICULE DE BREVET EUROPEEN

(11) **EP 0 747 889 B1**
(45) Date de publication et mention de la délivrance du brevet: **20.06.2001**
(21) Numéro de dépôt: 96401139.9
(22) Date de dépôt: 28.05.1996
(51) Int. Cl.: G11B 5/49, G11B 5/31, G11B 21/00

(54) **Tête d'enregistrement/lecture matricielle à structure zigzag**
Matrix-Schreib-/Lesekopf mit Zickzackstruktur
Matrix write/read head with zigzag structure

(30) Priorité: 06.06.1995 FR 9506651
(43) Date de publication de la demande: 11.12.1996
(73) Titulaire: THOMSON-CSF, 75008 Paris (FR)
(72) Inventeur: Colineau, Joseph, 92402 Courbevoie Cedex (FR)

(56) Documents cités:
- EP-A- 0 392 906
- EP-A- 0 409 675
- DE-A- 1 906 358
- NL-A- 7 107 030
- US-A- 4 439 793
- US-A- 5 124 869
- US-A- 5 212 680
- IBM TECHNICAL DISCLOSURE BULLETIN, vol. 36, no. 5, 1 Mai 1993, page 377/378 XP000409027 "COMPACT HORIZONTAL HEAD STRUCTURE FOR ARRAYS"

## Description

L'invention concerne une tête d'enregistrement/lecture matricielle de support d'informations dans laquelle les têtes élémentaires sont agencées sous forme d'une structure zigzag. Elle est applicable notamment à l'enregistrement/lecture de supports d'enregistrement multipistes tels que les bandes d'enregistreur magnétique dans les techniques de périphériques informatiques, d'enregistreurs professionnels, de magnétoscopes professionnels et grand public.

Des structures de têtes matricielles destinées à l'enregistrement multipiste de bandes magnétiques ont été décrites dans le Brevet français n° 2 630 853. Elles sont constituées de deux sous-ensembles fonctionnels : une partie supérieure, réalisée en couches minces, portant les entrefers M1, M2 et les pôles magnétiques des têtes 17.1, 18.1, et une partie inférieure, réalisée généralement en technologie conventionnelle (en volume), portant les bobinages d'excitation (14.1). L'invention concerne une disposition des pôles magnétiques et des entrefers permettant de rendre le fonctionnement du composant moins sensible aux imperfections de guidage de la bande magnétique.

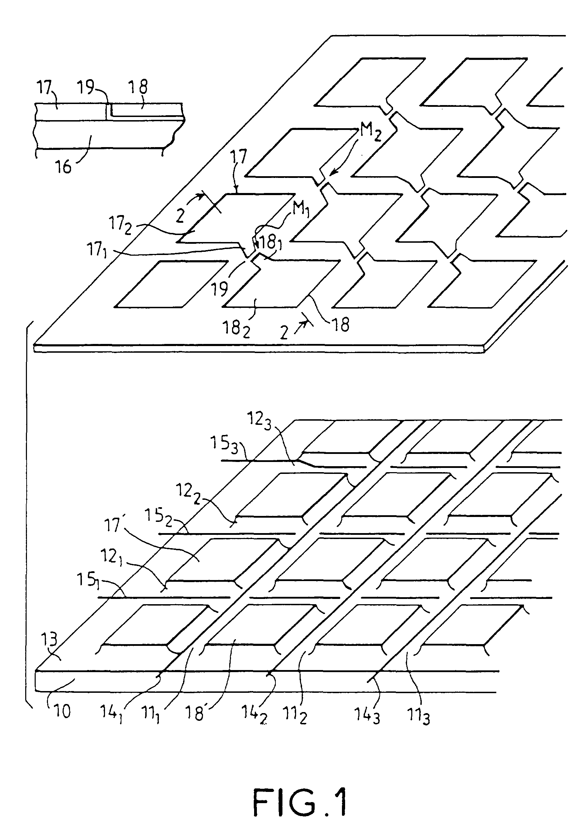

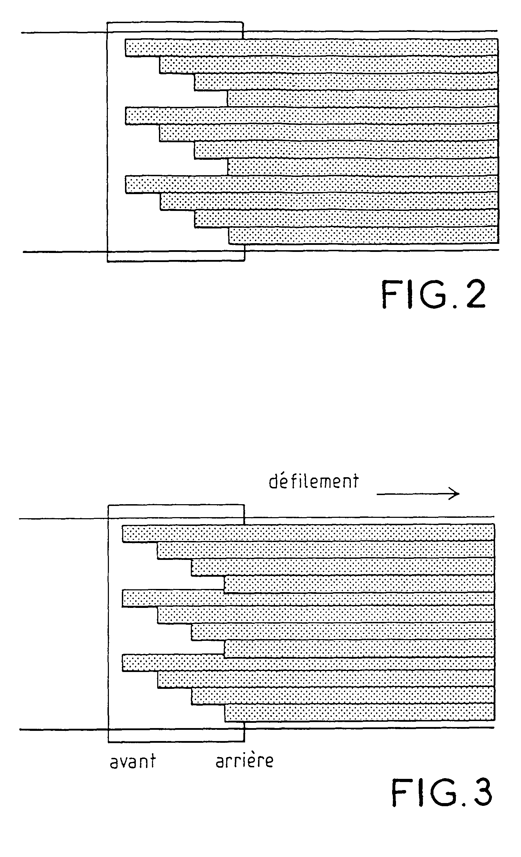

Afin de réaliser des dispositifs permettant d'enregistrer des pistes jointives de faible largeur, sans contraindre de manière excessive la technologie, on a disposé l'ensemble des entrefers d'écriture selon n colonnes de m entrefers (figure 1). Ces divers entrefers sont décalés l'un par rapport à l'autre afin de remplir la surface de la bande de pistes jointives (figure 2). Les entrefers sont donc disposés selon un réseau oblique dont les périodes horizontale et verticales sont sensiblement plus élevées que la largeur de piste. Cette disposition conduit à une écriture spatialement décalée sur chacune des pistes. Si la bande est affectée de défauts de guidage conduisant à des déplacements verticaux, les têtes situées vers l'arrière peuvent effacer partiellement les pistes déjà écrites par les têtes situées vers l'avant (figure 3). Le cas le plus critique est celui de la dernière colonne de têtes vis-à-vis des pistes écrites par la première colonne, puisque l'écart spatial entre ces deux groupes de pistes est n fois plus grand qu'entre les autres groupes consécutifs de pistes. Par suite de cet effet, on est conduit à resserrer d'un facteur n les contraintes dynamiques de guidage, ou à ne pas utiliser à sa capacité maximum le premier groupe de pistes.

Le moyen d'éviter cet effet est de disposer les entrefers de manière à ce que des pistes contiguës soient toujours écrites par des groupes d'entrefers dont la distance dans le sens du défilement soit minimum, c'est-à-dire par des groupes d'entrefers voisins (ou éventuellement par le même groupe d'entrefers).

L'invention concerne donc une tête d'enregistrement/lecture de support d'informations comportant une matrice d'éléments d'enregistrement/lecture disposés en lignes et colonnes, caractérisée en ce que deux lignes ou colonnes voisines ne sont pas parallèles.

Les différents objets et caractéristiques de l'invention apparaîtront plus clairement dans la description qui va suivre et dans les figures annexées qui représentent :
- les figures 1 à 3, des dispositifs connus dans la technique et décrits précédemment ;
- la figure 4, une tête matricielle d'enregistrement/lecture selon l'invention ;
- la figure 5, un détail de tête élémentaire d'enregistrement/lecture applicable à la figure 4 ;
- la figure 6, une variante de tête matricielle selon l'invention ;
- la figure 7, une variante de réalisation d'une tête d'enregistrement/lecture selon l'invention.

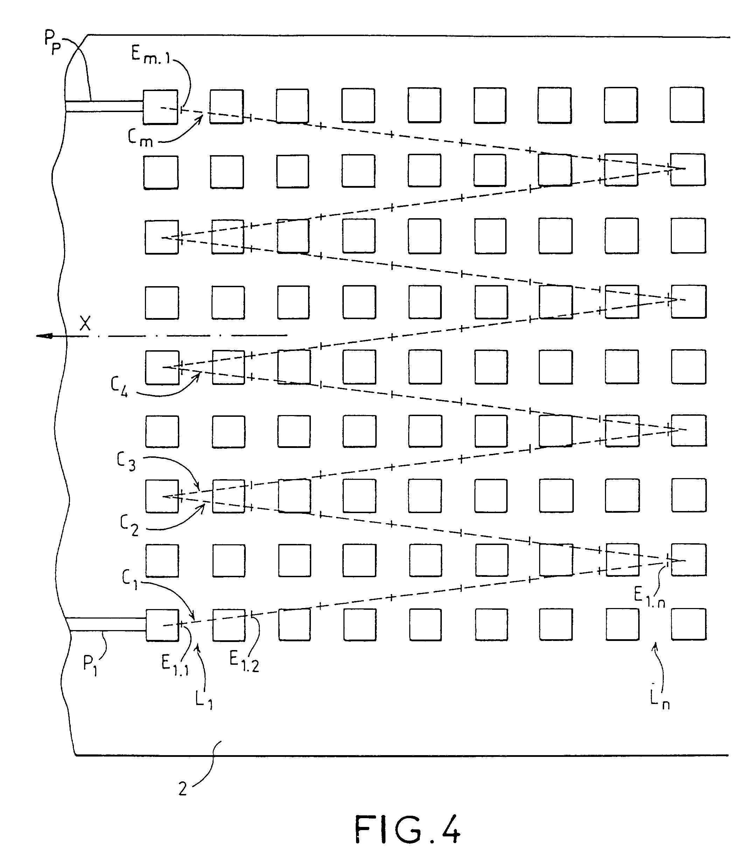

En se reportant à la figure 4, on va donc tout d'abord décrire un exemple de réalisation d'une tête matricielle d'enregistrement/lecture selon l'invention. Cette tête 1 comporte un ensemble d'éléments d'enregistrement/lecture arrangés en lignes et colonnes. La ligne L1 comporte les éléments E_{1.1} à E_{m.1} et la colonne C1 comporte les éléments E_{1.1} à E_{1.n}. Selon un exemple de réalisation, un support d'enregistrement 2 est appelé à se déplacer selon une direction X de façon à enregistrer (ou lire) des pistes P1 à Pp. Les lignes, telle que L1, sont alors perpendiculaires ou sensiblement perpendiculaires à cette direction X. Les colonnes C1 à Cm forment un angle aigu avec la direction X. Deux colonnes voisines sont concourantes. Selon l'exemple de la figure 4, les colonnes de rangs impairs C1, C3, ... sont parallèles entre elles et les colonnes de rangs pairs C2, C4, ... sont parallèles entre elles. De plus, deux colonnes voisines sont symétriques par rapport à la direction X.

Lorsque le support d'enregistrement 2 se déplace devant la tête d'enregistrement 1, l'élément ou tête élémentaire E_{1.1} parcourt la tête P1 et lit ou enregistre cette piste. L'élément E_{1.2} parcourt la piste P2, l'élément E_{1.n} parcourt la piste Pn et l'élément E_{m.1}, la piste Pm. Le nombre de pistes lues ou enregistrées est donc p = m.n.

Les éléments d'enregistrement/lecture peuvent être les entrefers de têtes magnétiques ou tout autre moyen capable d'enregistrer ou lire sur un support d'enregistrement.

Selon la technique décrite en relation avec la figure 1, les pôles magnétiques situés de part et d'autre d'un entrefer peuvent avoir des longueurs différentes.

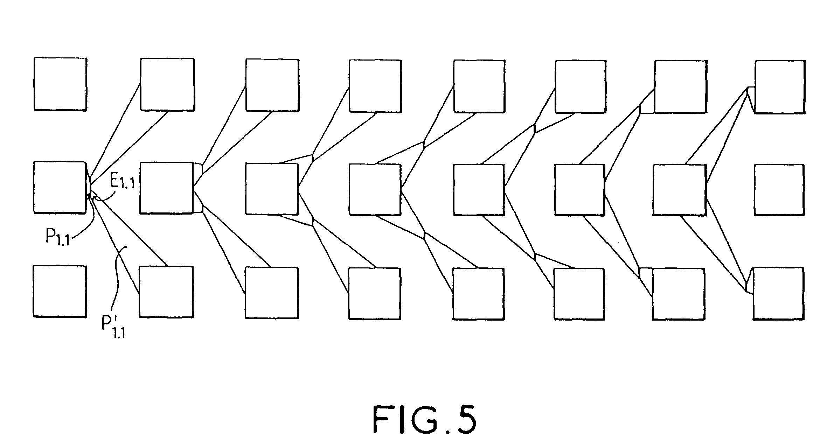

Ainsi sur la figure 5, l'entrefer E_{1.1} est délimité par les pôles P_{1.1} et P'_{1.1}, le pôle P_{1.1} étant plus court que le pôle P'_{1.1}. Par contre l'entrefer E_{1.n} est délimité par un pôle P_{1.n} et par un pôle P'_{1.n} qui est plus court que le pôle P₁. Les longueurs des pôles varient graduellement le long d'une colonne d'une tête magnétique à la suivante entre une longueur maximale telle que celle de P'_{1.1} à une longueur minimale telle que celle de P_{1.1}. Comme cela est représenté sur la figure 1, les pôles magnétiques sont couplés magnétiques à des plots magnétiques tels que 18' qui permettent de fermer les circuits magnétiques des têtes magnétiques par la plaque 10.

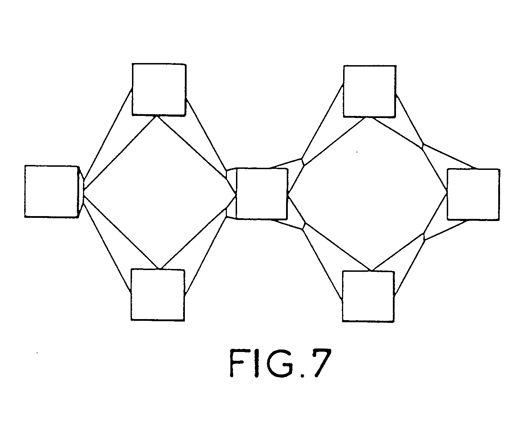

Selon une variante de réalisation représentée en figure 7, et appliquant un mode de réalisation décrit dans le Brevet français, on prévoit un nombre inférieur de plots magnétiques comparés aux nombres de plots prévus dans la configuration de la figure 5. Pour cela, à chaque plot sont couplés magnétiquement quatre pôles au lieu de deux sur la figure 5. Le principe de longueurs différentes des pôles reste le même dans cette configuration.

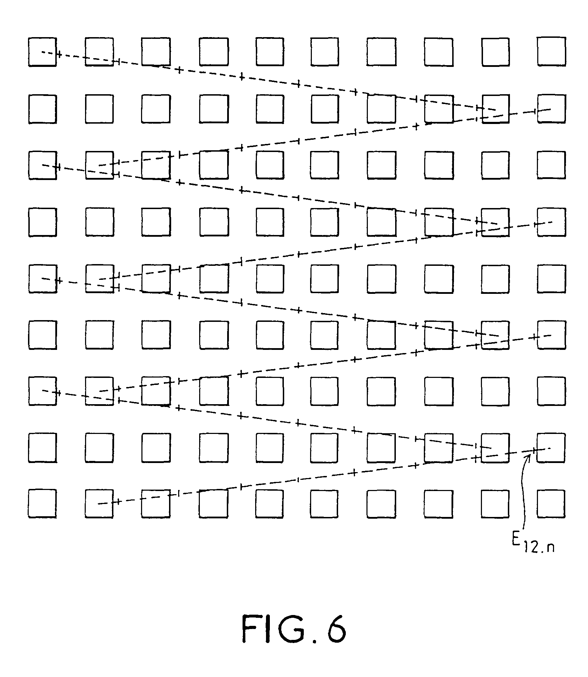

Dans la configuration de la figure 4, on a deux têtes élémentaires côte à côte entre deux colonnes voisines. C'est le cas des têtes élémentaires E_{1.n} et E_{2.n}. Cela peut rendre difficile une bonne définition des pistes relatives à ces têtes en raison des limitations des procédés de gravure. La figure 6 fournit une variante qui résout ce problème. Dans cette variante, une tête élémentaire E12n par exemple, est commune à deux colonnes voisines.

Ceci permet de constater que le fonctionnement du dispositif ne sera pas affecté par la disposition particulière des entrefers. En effet, chaque entrefer est situé sur une diagonale reliant deux plots magnétiques, au-dessus d'un -et d'un seul- croisement de fils d'excitation des lignes et des colonnes. Le fait qu'il ne soit pas au centre de ce motif ne modifie pas l'excitation magnétique qu'il reçoit, si la perméabilité du matériau constituant les pôles est suffisamment grande.

Les autres différences avec des réalisations actuellement connues sont les suivantes :
- le réseau de conducteurs et de rainures de lignes et de colonnes est ici rectangulaire, contrairement à des réalisations actuelles, où les lignes horizontales sont généralement disposées en oblique de manière à ce que les entrefers, qui sont disposées sur des lignes obliques afin d'écrire des pistes adjacentes, restent au centre de chaque motif.
- les lignes verticales d'entrefers ne sont pas situées au centre des rainures verticales, ce qui permet d'augmenter la distance entre pôles et plots de ferrite dans les colonnes extérieures de la tête.

## Revendications

1. Tête d'enregistrement/lecture de support d'informations comportant une matrice d'éléments d'enregistrement/lecture disposés en lignes et colonnes, caractérisée en ce que les lignes ou colonnes voisines ne sont pas parallèles.

2. Tête d'enregistrement/lecture selon la revendication 1, caractérisée en ce que les lignes ou colonnes de rangs pairs sont parallèles entre elles et les lignes ou colonnes de rangs impairs sont parallèles entre elles.

3. Tête d'enregistrement/lecture selon la revendication 1, caractérisée en ce qu'elle prévoit une direction de déplacement relatif par rapport à un support d'informations, deux lignes ou colonnes voisines étant symétriques par rapport à cette direction.

4. Tête d'enregistrement/lecture selon la revendication 3, caractérisée en ce que chaque élément d'enregistrement/lecture permet l'inscription sur le support d'informations, d'une marque d'information d'une largeur déterminée mesurée selon une direction perpendiculaire à la direction de déplacement, et en ce que l'angle de chaque ligne ou colonne avec la direction de déplacement est tel que les différents éléments permettent d'enregistrer/de lire des pistes différentes sur le support d'enregistrement, ces pistes étant jointives ou non jointives.

5. Tête d'enregistrement/lecture selon la revendication 1, caractérisée en ce qu'elle utilise un procédé d'enregistrement/lecture magnétique et en ce que les éléments d'enregistrement/lecture sont des entrefers de têtes magnétiques élémentaires.

6. Tête d'enregistrement/lecture selon la revendication 5, caractérisé en ce qu'elle comporte une matrice de plots magnétiques pour la fermeture du champ magnétique, chaque plot étant relié à un plot voisin par deux pôles magnétiques (P1.1, P'1.1) séparés par un entrefer (E_{1.1}) les longueurs des pôles des têtes magnétiques élémentaires d'une même colonne étant différentes.

7. Tête d'enregistrement/lecture selon la revendication 6, caractérisé en ce que les longueurs des plots élémentaires d'une même colonne varient graduellement d'une tête élémentaire à la tête suivante.

## Claims

1. Recording/reading head for information medium comprising a matrix of recording/reading elements arranged in rows and columns, characterized in that the neighbouring rows or columns are not parallel.

2. Recording/reading head according to Claim 1, characterized in that the rows or columns of even orders are parallel to one another and the rows or columns of odd orders are parallel to one another.

3. Recording/reading head according to Claim 1, characterized in that it makes provision for a direction of relative shift with respect to an information medium, two neighbouring rows or columns being symmetric with respect to this direction.

4. Recording/reading head according to Claim 3, characterized in that each recording/reading element allows the recording on the information medium of an information mark of a determined width measured in a direction perpendicular to the direction of shift, and in that the angle of each row or column with the direction of shift is such that the various elements make it possible to record/read different tracks on the recording medium, these tracks being adjoining or non-adjoining.

5. Recording/reading head according to Claim 1, characterized in that it uses a magnetic recording/reading process and in that the recording/reading elements are gaps of elementary magnetic heads.

6. Recording/reading head according to Claim 5, characterized in that it includes a matrix of magnetic pads for closing the magnetic field, each pad being linked to a neighbouring pad by two magnetic poles (P1.1, P'1.1) separated by a gap (E_{1.1}) the lengths of the poles of the elementary magnetic heads of one and the same column being different.

7. Recording/reading head according to Claim 6, characterized in that the lengths of the elementary pads of one and the same column vary gradually from one elementary head to the next head.

## Patentansprüche

1. Schreib-/Lesekopf für Informationsträger, der eine Matrix aus Schreib-/Leseelementen umfaßt, die in Zeilen und Spalten angeordnet sind, dadurch gekennzeichnet, daß benachbarte Zeilen oder Spalten nicht parallel sind.

2. Schreib-/Lesekopf nach Anspruch 1, dadurch gekennzeichnet, daß Zeilen oder Spalten mit geradzahligem Rang zueinander parallel sind und Zeilen oder Spalten mit ungeradzahligem Rang zueinander parallel sind.

3. Schreib-/Lesekopf nach Anspruch 1, dadurch gekennzeichnet, daß er eine Richtung der relativen Verschiebung in bezug auf einen Informationsträger aufweist, wobei zwei benachbarte Zeilen oder Spalten in bezug auf diese Richtung symmetrisch sind.

4. Schreib-/Lesekopf nach Anspruch 3, dadurch gekennzeichnet, daß jedes Schreib-/Leseelement das Schreiben eines Informationskennzeichens mit einer bestimmten Breite, die in einer zur Verschiebungsrichtung senkrechten Richtung gemessen wird, auf den Informationsträger ermöglicht und daß der Winkel jeder Zeile oder Spalte zu der Verschiebungsrichtung derart ist, daß die verschiedenen Elemente das Schreiben/Lesen verschiedener Spuren auf dem Aufzeichnungsträger ermöglichen, wobei diese Spuren nebeneinander oder nicht nebeneinander liegen.

5. Schreib-/Lesekopf nach Anspruch 1, dadurch gekennzeichnet, daß er ein magnetisches Schreib-/Leseverfahren verwendet und daß die Schreib-/Leseelemente Luftspalte elementarer Magnetköpfe sind.

6. Schreib-/Lesekopf nach Anspruch 5, dadurch gekennzeichnet, daß er eine Matrix aus magnetischen Klötzen zum Schließen des Magnetfeldes umfaßt, wobei jeder Klotz mit einem benachbarten Klotz über zwei Magnetpole (P1.1, P'1.1) verbunden ist, die durch einen Luftspalt (E1.1) getrennt sind, wobei die Längen der Pole der elementaren Magnetköpfe derselben Spalte verschieden sind.

7. Schreib-/Lesekopf nach Anspruch 6, dadurch gekennzeichnet, daß sich die Längen der elementaren Klötze derselben Spalte von einem elementaren Kopf zum folgenden Kopf allmählich ändern.
